# EUROPÄISCHE PATENTSCHRIFT

(11) **EP 2 332 748 B1**
(45) Veröffentlichungstag und Bekanntmachung des Hinweises auf die Patenterteilung: **10.02.2016**
(21) Anmeldenummer: 10181685.8
(22) Anmeldetag: 29.09.2010
(51) Int. Cl.: B60C 11/01, B60C 13/02, B60C 11/03

(54) **Fahrzeugluftreifen**
Pneumatic tyres for a vehicle
Pneus de véhicule

(30) Priorität: 03.12.2009 DE 102009044750
(43) Veröffentlichungstag der Anmeldung: 15.06.2011
(73) Patentinhaber: Continental Reifen Deutschland GmbH, 30165 Hannover (DE)
(72) Erfinder: Behr, Ulrich, 30169, Hannover (DE); Fischer, Markus, 30823, Garbsen (DE)
(74) Vertreter: Finger, Karsten

(56) Entgegenhaltungen:
- EP-A1- 2 204 295

## Beschreibung

Die Erfindung betrifft einen Fahrzeugluftreifen mit einem Laufstreifenprofil und mit zwei Reifenseitenwänden, bei dem das Laufstreifenprofil sich von Reifenschulter zu Reifenschulter über den gesamten axialen Erstreckungsbereich der Bodenaufstandsbreite T_{A} erstreckt und bei dem in wenigstens einer Reifenschulter eine Profilblockreihe mit in Umfangsrichtung U des Fahrzeugluftreifens hintereinander angeordneten radial erhabenen Profilelementen und mit quer- oder schräg verlaufenden Rillen oder Nuten ausgebildet ist, wobei die Profilelemente außerhalb der Bodenaufstandsbreite T_{A} in den Schnittebenen, die die Reifenachse beinhalten, an ihrer nach radial außen weisenden Oberfläche zur nächstliegenden Reifenseitenwand hin gekrümmt sind und sich die Reifenseitenwand mit ihrer nach axial außen weisenden Oberfläche in Verlängerung der Profilelemente an die Profilelemente anschließt und nach radial innen bis zu einem Befestigungsabschnitt des Reifens zur Befestigung auf einer Felge verlaufen.

Ein Laufstreifenprofil nach dem Oberbegriff des Anspruchs 1 ist z.B. in WO 2011/033602 A1 offenbart. Bei derartigen Fahrzeugluftreifen ist im sogenannten Off-Shoulder-Bereich des Reifens, in welchem die Profilelemente in die Reifenseitenwand übergehen, die Reifenoberfläche mehr oder weniger glatt ausgebildet mit im Wesentlichen glattem fließendem Übergang. Zum Teil werden im Übergangsbereich - auch aus optischen Gründen - feinst ausgebildete Rillen ausgebildet, die den Übergang je nach Ausbildung hervorheben oder schwierige Materialübergänge kaschieren. Bei hohen Geschwindigkeiten fließt die anströmende Luft entlang der gekrümmten Oberfläche dieser im Off-Shoulder-Bereich gekrümmten Profilelemente und der Seitenwand. Die glatten Oberflächen in diesem im Bereich der Krümmung ausgebildeten Übergang bewirken undefiniert Verwirbelungen und Ablösungen der Grenzschicht, die mit Widerstandserhöhungen einhergehen. Die optisch bedingten Feinstrillen können zusätzliche Störungen der Grenzschicht einhergehend mit weiteren Verwirbelungen und Grenzschichtablösungen bewirken, wodurch der Luftwiderstand weiter erhöht wird. Diese Effekte bewirken eine Erhöhung des Gesamt-Energieverbrauchs des Fahrzeugluftreifens und können darüber hinaus zu unerwünschter Geräuschentstehung des Fahrzeugs beitragen. Gerade bei hohen Anströmungsgeschwindigkeiten, wie sie bei PKW-Fahrzeugen erreicht werden können, besteht verstärkt die Gefahr des Auftretens derartiger Effekte.

Der Erfindung liegt die Aufgabe zugrunde, mit einfachen Mitteln einen derartigen Fahrzeugluftreifen mit reduziertem Luftwiderstand zu ermöglichen.

Die Aufgabe wird erfindungsgemäß durch die Ausbildung eines Fahrzeugluftreifen mit einem Laufstreifenprofil und mit zwei Reifenseitenwänden, bei dem das Laufstreifenprofil sich von Reifenschulter zu Reifenschulter über den gesamten axialen Erstreckungsbereich der Bodenaufstandsbreite T_{A} erstreckt und bei dem in wenigstens einer Reifenschulter eine Profilblockreihe mit in Umfangsrichtung U des Fahrzeugluftreifens hintereinander angeordneten radial erhabenen Profilelementen und mit quer- oder schräg verlaufenden Rillen oder Nuten ausgebildet ist, wobei die Profilelemente außerhalb der Bodenaufstandsbreite T_{A} in den Schnittebenen, die die Reifenachse beinhalten, an ihrer nach radial außen weisenden Oberfläche zur nächst liegenden Reifenseitenwand gekrümmt ist und sich die Reifenseitenwand mit ihrer nach axial außen weisenden Oberfläche in Verlängerung der Profilelemente an die Profilelemente anschließt und nach radial innen bis zu einem Befestigungsabschnitt des Reifens zur Befestigung auf einer Felge verlaufen, gelöst, bei dem sich die Profilelemente mit ihrer radial äußeren gekrümmten Oberfläche in axialer Richtung A in Richtung zur Reifenseitenwand bis zu einer in Umfangsrichtung U des Fahrzeugluftreifens erstreckte Kante erstrecken und bei dem die Profilelemente an der Kante von einer Flanke begrenzt werden, welche jeweils in den Schnittebenen, die die Reifenachse beinhalten, unter einem Neigungswinkel α zur Tangente t mit 80° ≤ α ≤ 100° an die gekrümmte radial äußere Oberfläche des Profilelementes in der Kante und mit einem Neigungswinkel β zur Radialen R des Fahrzeugluftreifens mit 45°< β ≤ 60° verlaufend ausgebildet ist und die sich bis zur radial äußeren Oberfläche der Reifenseitenwand erstreckt, und bei dem sich die radial äußere Oberfläche der Reifenseitenwand von der Flanke ausgehend dach radial innen bis zu dem Befestigungsabschnitt des Reifens erstreckt.

Durch diese Ausbildung erhält die Oberfläche des Reifens im kritischen Bereich der Off-Shoulder im Anschluss an die Krümmung des Profilelementes im Übergang zwischen Profilelement und Reifenseitenwand durch die Flanke mit Neigungswinkel α und β eine gezielte Abrisskante, welche einen definierten Abriss der Grenzschicht in dem für Turbulenzen kritischen Bereich ermöglicht. Die Entstehung ungewünschter Verwirbelungen der Strömung und unkontrollierter Abrisse der Strömung kann hierdurch reduziert werden. Der Luftwiderstand des Reifens beim Fahren kann hierdurch reduziert und durch undefinierte Verwirbelungs- und Ablöseerscheinungen bedingte Geräuschentstehung verringert werden.

Besonders vorteilhaft zur einfachen Schaffung einer sicheren Abrisskante ist die Ausbildung eines Fahrzeugluftreifens gemäß den Merkmalen von Anspruch 2, wobei α =90° ausgebildet ist.

Besonders vorteilhaft ist die Ausbildung eines Fahrzeugluftreifens gemäß den Merkmalen von Anspruch 3, wobei β=50° ausgebildet ist.

Besonders vorteilhaft ist die Ausbildung eines Fahrzeugluftreifens gemäß den Merkmalen von Anspruch 4, wobei die Kante zumindest in ihrem Hauptstreckungsabschnitt in Umfangsrichtung U in ihrem Verlauf jeweils einen Winkel γ zur Umfangsrichtung U einschließt mit 2°≤ γ ≤10° - insbesondere mit γ = 5°. Dies ermöglicht beim drehenden Reifen eine gleitend auf die anströmende Luft einwirkende Abrisskante.

Die Erfindung wird im Folgenden an Hand eines in den Figuren 1 bis 5 dargestellten Ausführungsbeispieles eines Fahrzeugluftreifens für Personenkraftwagen (PKW) näher erläutert. Hierin zeigen
- Fig. 1: Umfangsabschnitt eines Fahrzeugluftreifens in perspektivischer Darstellung mit Blick auf das Laufstreifenprofil im Bereich der rechten Reifenschulter,
- Fig. 2: Fahrzeugluftreifen gemäß Figur 1 in Draufsicht,
- Fig. 3: Darstellung des Fahrzeugluftreifens von Figur 1 in Seitenansicht gemäß Ansicht III-III von Figur 2 zur Darstellung des radial äußeren Erstreckungsbereiches des Reifens,
- Fig. 4: Querschnittsdarstellung des Übergangsbereichs von Laufstreifen zur Reifenseitenwand gemäß Schnitt IV-IV von Figur 2 und
- Fig. 5: Querschnittsdarstellung des Übergangsbereichs von Laufstreifen zur Reifenseitenwand gemäß Schnitt V-V von Figur 2.

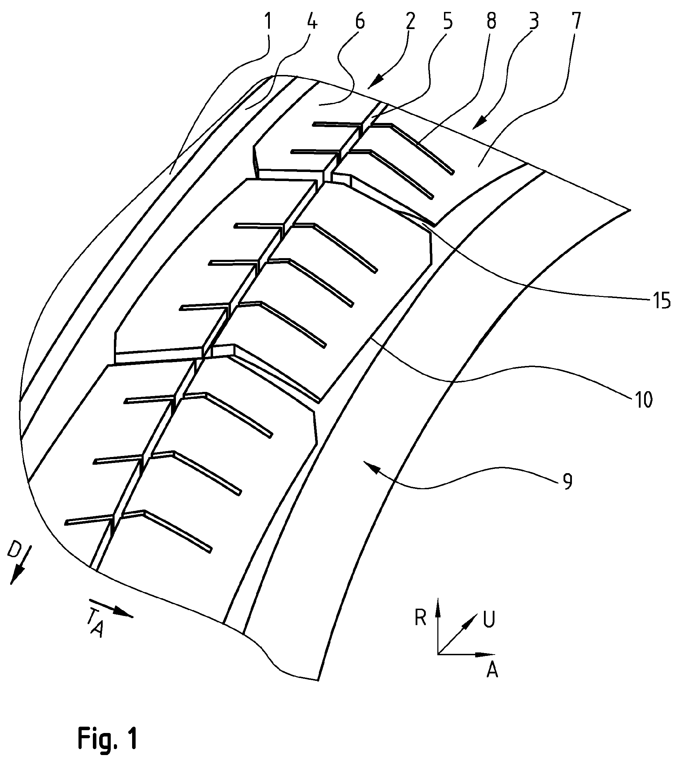

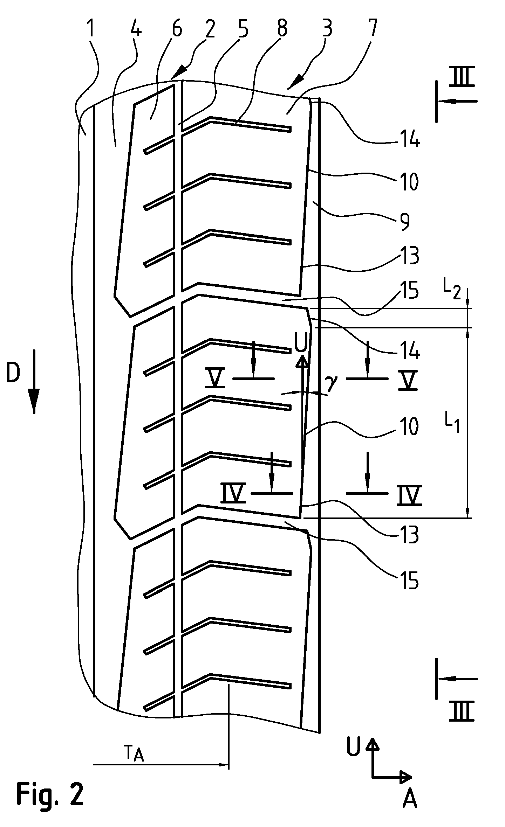

Die Figuren zeigen einen Fahrzeugluftreifen für PKW-Reifen, der für Hochgeschwindigkeiten geeignet ist. Zur Vereinfachung zeigen die Figuren 1 und 2 lediglich einen der beiden axial äußeren Erstreckungsbereich des Laufstreifensprofiles, welches von einer axialen Position innerhalb der Bodenaufstandsbreite T_{A} im Bereich der Reifenschulter bis außerhalb der Bodenaufstandsbreite T_{A} und im weiteren axialen Erstreckungsbereich nach axial außen bis in den Off-Shoulder-Bereich und die sich an das Laufstreifenprofil anschließende Reifenseitenwand 9 erstreckt. Die Reifenseitenwand 9erstreckt sich in bekannter, jedoch hier nicht näher dargestellten Weise in radialer Richtung R nach innen bis zu ihrem nicht dargestellten Befestigungsbereich zur Befestigung des Reifens auf einer Reifenfelge. Der Befestigungsbereich ist beispielsweise ein bekannter Reifenwulst, der mit einem zugfesten Wulstkern bestückt und am radial inneren Erstreckungsende der Reifenseitenwand 9 ausgebildet ist.

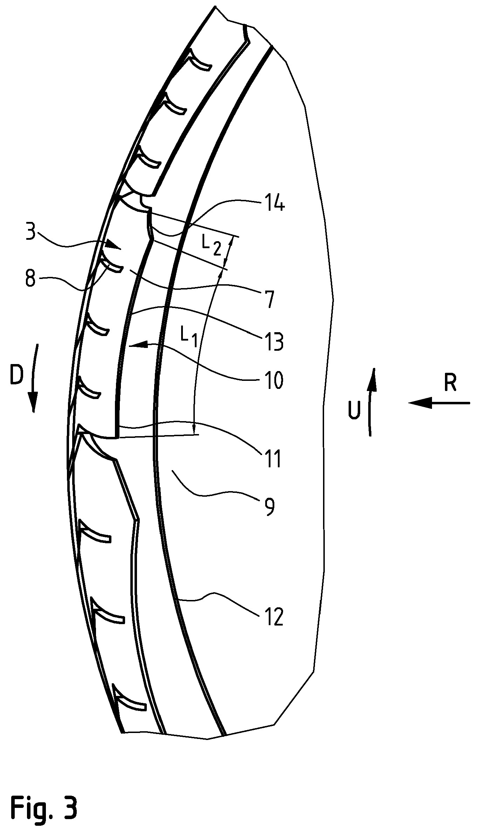

Die Figuren 1 bis 3 zeigen den axial äußeren Erstreckungsbereich des Laufstreifenprofils mit einer über den gesamten Umfang des Fahrzeugluftreifens erstreckten und in Umfangsrichtung U ausgerichteten Umfangsrippe 1, mit einer in axialer Richtung A nach außen benachbart angeordneten, über den gesamten Umfang des Fahrzeugluftreifens in Umfangsrichtung U ausgerichteten Profilblockreihe 2 und mit einer über den gesamten Umfang eines Fahrzeugluftreifens erstreckten und in Umfangsrichtung U ausgerichteten Profilblockreihe 3, welche axial neben der Profilblockreihe 2 angeordnet ist. Die Umfangsrippe 1 und die Profilblockreihe 2 sind in axialer Richtung A durch eine über den gesamten Umfang des Fahrzeugluftreifens erstreckte und in Umfangsrichtung U ausgerichtete Umfangsrille 4 bekannter Art voneinander getrennt. Die Profilblockreihe 2 und die Profilblockreihe 3 sind in axialer Richtung A durch eine gegenüber der Umfangsrille 4 schmalere Umfangsrille 5, welche sich über den gesamten Umfang des Fahrzeugluftreifens in Umfangsrichtung U ausgerichtet geradlinig erstreckt, voneinander getrennt. Die Profilblockreihe 2 und die Profilblockreihe 3 bilden gemeinsam den Schulterbereich des Fahrzeugluftreifens und decken die nicht dargestellten axialen Gürtelkanten des Fahrzeugluftreifens in radialer Richtung R nach außen ab.

Die Bodenaufstandsfläche erstreckt sich mit ihrer axialen Bodenaufstandsbreite T_{A} bis in den axialen Erstreckungsbereich der Profilblockreihe 3 hinein. Die Profilblockreihe 2 ist aus einer Vielzahl von über den Umfang des Fahrzeugluftreifens verteilt angeordneten und in Umfangsrichtung U jeweils durch eine Querrille 15 von einander beabstandeten Profilblockelementen 6 bekannter Art ausgebildet. Die Profilblockreihe 3 ist aus einer Vielzahl von über den Umfang des Fahrzeugluftreifens verteilten, in Umfangsrichtung U hintereinander angeordneten und jeweils durch eine Querrille 15 von einander beabstandeten Profilblockelementen 7 bekannter Art ausgebildet. Die Profilblockelemente 6 erstrecken sich in axialer Richtung von der Umfangsrille 4 bis zur Umfangsrille 5. Die Profilblockelemente 7 erstrecken sich in axialer Richtung A von der Umfangsrille 5 bis zu einer das jeweilige Profilblockelement 7 in axialer Richtung A nach außen zur Reifenseitenwand 9 hin begrenzenden Kante 10. Die Kante 10 erstreckt sich jeweils über die gesamte Umfangserstreckung eines Profilblockelementes 7 von der einen das Profilblockelement 7 begrenzenden Querrille 15 bis zur nächsten das Profilblockelement 7 begrenzenden Querrille 15.

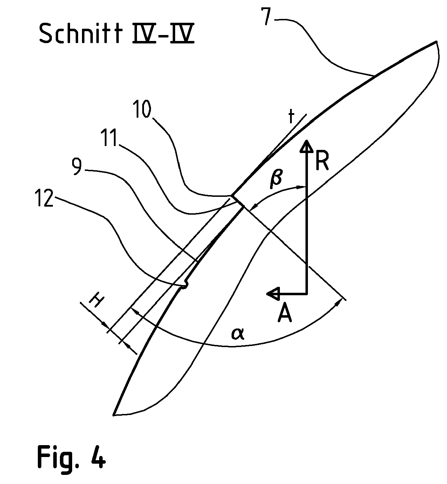

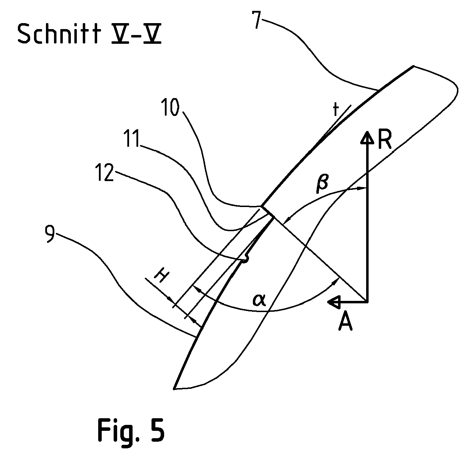

Wie in den Figuren 1 bis 5 zu erkennen ist, sind die Profilblockelemente 7 in den die Reifenachse beinhaltenden Schnittebenen an ihrer nach radial außen das Profilblockelement 7 begrenzenden Oberfläche gekrümmt ausgebildet. Wie in den Figuren 4 und 5 zu erkennen ist, liegt der Krümmungsmittelpunkt dieser Krümmungen in den Schnittebenen, welche die Reifenachse beinhaltet, jeweils auf der zur Innenseite des Reifens weisenden Seite der Oberfläche.

Wie in den Figuren 4 und 5 zu erkennen ist, sind die Profilblockelemente 7 auf ihrer von der Umfangsrille 5 weg weisenden axialen Außenseite jeweils von einer Profilblockelementflanke 11 begrenzt, die sich - wie in den Figuren 4 und 5 zu erkennen ist - geradlinig über eine Höhe H, die die Erstreckungslänge zwischen der Kante 10 und dem in der Oberfläche der Reifenseitenwand 9 ausgebildeten Fuß der Profilblockelementflanke 11 bildet, erstreckt. Die Profilblockelementflanke 11 schließt dabei in jeder Schnittebene, die die Reifenachse beinhaltet, einen Winkel α zu der in der Kante 10 an die gekrümmte radial äußere Oberfläche des Profilblockelementes 7 gebildeten Tangente t und einen Neigungswinkel β zur radialen Richtung R des Fahrzeugluftreifens ein mit 80° ≤ α ≤ 100° und mit 45° < β ≤ 60°.

Die Höhe H der Profilblockelementflanke 11 ist mit 0,5 mm ≤ H ≤ 1,5 mm ausgebildet.

Im dargestellten Ausführungsbeispiel ist α = 90°, β = 50° und H = 1 mm ausgebildet.

Von dem den Schnittpunkt zwischen Reifenseitenwand 9 und Profilblockelementflanke 11 gebildet Fuß der Flanke 11 ausgehend erstreckt sich die äußere den Reifen in axialer Richtung A begrenzende Oberfläche der Reifenseitenwand 9 über den gesamten radialen Erstreckungsbereich des Reifens in radialer Richtung R nach innen und zwar zunächst mit ihrem radial äußeren Erstreckungsbereich der Reifenseitenwand im Wesentlichen nach radial innen bis zu ihrem radial inneren Erstreckungsbereich und dann weiter bis zu dem am radial inneren Erstreckungsbereich der Seitenwand ausgebildeten und nicht dargestellten Befestigungsbereich des Reifens.

Die Figuren zeigen ein weiteres Ausführungsbeispiel, bei der die Kante 10 aus einem - in der in den Figuren 1 bis 3 mit Pfeil eingetragenen - Drehrichtung D des Fahrzeugluftreifens bei Vorwärtsfahrt des auf ein Fahrzeug montierten Fahrzeugluftreifens ersten längeren Umfangserstreckungsbereich 13 der in Umfangsrichtung U gemessenen Länge L₁ und aus einem in Drehrichtung D nachgeordneten deutlichen kürzeren Umfangserstreckungsabschnitt 14, der in Umfangsrichtung U gemessenen Erstreckungslänge L₂ ausgebildet ist mit L₁>(5L₂).

Im langen Erstreckungsabschnitt 13 ist - wie in Figur 2 dargestellt ist - die Kante 10 unter Einschluss eines Winkels γ zur Umfangsrichtung U mit 2° ≤ γ ≤ 10° ausgerichtet, wobei in Drehrichtung D die Schnittkante 10 im Erstreckungsbereich 13 eine Orientierung mit geringer in axialer Richtung A nach innen zur nicht dargestellten Reifenäquatorebene hin ausgebildeten Neigung aufweist. In dem kurzen Erstreckungsabschnitt 14 ist die Schnittkante 10 mit zur Neigungsrichtung der Schnittkante 13 gegenläufiger Neigungsrichtung ausgerichtet, so dass die Schnittkante 10 im Schnittpunkt der Erstreckungsbereiche 13 und 14 ihre in axialer Richtung A des Fahrzeugluftreifens am weitest außen gelegene Position im Fahrzeugluftreifen einnimmt.

Die Figuren 1 bis 3 zeigen ein weiteres Ausführungsbeispiel, bei dem in den Profilblockelementen 6 und 7 zusätzliche Feineinschnitte 8 ausgebildet sind, die sich ausgehend vom Profilblockelement 6 über die Umfangsrille 5 hinweg verlängert, bis in das Profilblockelement 7 hinein erstrecken und mit axialem Abstand zur Kante 10 enden.

Die Feineinschnitte 8 sind parallel zueinander und zu den Querrillen 15 verlaufend ausgebildet.

In einem anderen Ausführungsbeispiel sind die Einschnitte 8 als zusätzliche Quernuten ausgebildet, die jedoch ebenfalls im axialen Abstand von der Kante 10 im Profilblockelement 7 enden.

Die Gesamterstreckungslänge L = (L₁ + L₂) der Kante 10 ist mit 40 mm ≤ L ≤ 200 mm gewählt und ist in Abhängigkeit von der Reifendimension und der optimierten Pitchlängen-Variation des Reifens gewählt.

### Bezugszeichenliste

### (Teil der Beschreibung)

- 1: Umfangsrippe
- 2: Profilblockreihe
- 3: Profilblockreihe
- 4: Umfangsrille
- 5: Umfangsrille
- 6: Profilblockelement
- 7: Profilblockelement
- 8: Feineinschnitt
- 9: Reifenseitenwand
- 10: Kante
- 11: Flanke
- 12: Optische Rille
- 13: Kantenerstreckungsabschnitt
- 14: Kantenerstreckungsabschnitt
- 15: Querrille

## Patentansprüche

1. Fahrzeugluftreifen **für Personenkraftwagen (PKW)** mit einem Laufstreifenprofil und mit zwei Reifenseitenwänden (9), bei dem das Laufstreifenprofil sich von Reifenschulter zu Reifenschulter über den gesamten axialen Erstreckungsbereich der Bodenaufstandsbreite T_{A} erstreckt und bei dem in wenigstens einer Reifenschulter eine Profilblockreihe (3) mit in Umfangsrichtung U des Fahrzeugluftreifens hintereinander angeordneten radial erhabenen Profilelementen (7) und mit quer- oder schräg verlaufenden Rillen (15) oder Nuten ausgebildet ist, wobei die Profilelemente (7) außerhalb der Bodenaufstandsbreite T_{A} in den Schnittebenen, die die Reifenachse beinhalten, an ihrer nach radial außen weisenden Oberfläche zur nächstliegenden Reifenseitenwand (9) hin gekrümmt sind und sich die Reifenseitenwand (9) mit ihrer nach axial außen weisenden Oberfläche in Verlängerung der Profilelemente (7) an die Profilelemente (7) anschließt und nach radial innen bis zu einem Befestigungsabschnitt des Reifens zur Befestigung auf einer Felge **erstreckt**,
**dadurch gekennzeichnet,**
**dass** sich die Profilelemente (7) mit ihrer radial äußeren gekrümmten Oberfläche in axialer Richtung A in Richtung zur Reifenseitenwand (9) bis zu einer in Umfangsrichtung U des Fahrzeugluftreifens erstreckten Kante (10) erstrecken und dass die Profilelemente (7) an der Kante (10) von einer Flanke (11) begrenzt werden, welche jeweils in den Schnittebenen, die die Reifenachse beinhalten, unter einem Neigungswinkel α zur Tangente t mit 80° ≤ α ≤ 100° an die gekrümmte radial äußere Oberfläche des Profilelementes (7) in der Kante (10) und mit einem Neigungswinkel β zur Radialen R des Fahrzeugluftreifens mit 45°< β ≤ 60° verlaufend ausgebildet ist und sich bis zur radial äußeren Oberfläche der Reifenseitenwand (9) erstreckt, und
**dass** sich die radial äußere Oberfläche der Reifenseitenwand (9) von der Flanke (11) ausgehend nach radial innen bis zu dem Befestigungsabschnitt des Reifens erstreckt.

2. Fahrzeugluftreifen gemäß den Merkmalen von Anspruch 1,
wobei α =90° ausgebildet ist.

3. Fahrzeugluftreifen gemäß den Merkmalen von Anspruch 1 oder Anspruch 2,
wobei β=50° ausgebildet ist.

4. Fahrzeugluftreifen gemäß den Merkmalen von einem oder mehreren der vorangegangenen Ansprüche,
wobei die Kante (10) zumindest in ihrem Hauptstreckungsabschnitt (13) in Umfangsrichtung U in ihrem Verlauf jeweils einen Winkel γ zur Umfangsrichtung U einschließt mit 2°≤ γ ≤10° - insbesondere mit γ = 5°.

## Claims

1. Pneumatic vehicle tyre for passenger cars, comprising a tread profile and comprising two tyre sidewalls (9), in which tyre the tread profile extends from tyre shoulder to tyre shoulder over the entire axial range of extent of the ground contact width T_{A} and in which tyre a.row of profile blocks (3) with radially raised profile elements (7) arranged one behind the other in the circumferential direction U of the pneumatic vehicle tyre and with transversely or obliquely running grooves (15) or channels is formed in at least one tyre shoulder, wherein, in the sectional planes that contain the tyre axis, the profile elements (7) outside the ground contact width T_{A} are curved at their radially outwardly facing surface towards the nearest tyre sidewall (9) and the tyre sidewall (9) adjoins the profile elements (7) with its axially outwardly facing surface as an extension of the profile elements (7) and extends radially inwards up to a mounting portion of the tyre for mounting on a rim,
**characterized**
**in that** the profile elements (7) extend with their radially outer curved surface in the axial direction A in the direction of the tyre sidewall (9) up to an edge (10) that is made to extend in the circumferential direction U of the pneumatic vehicle tyre and in that the profile elements (7) are delimited at the edge (10) by a flank (11), which is respectively formed in the sectional planes that contain the tyre axis as running at an angle of inclination α with respect to the tangent t where 80° ≤ α ≤ 100° to the curved radially outer surface of the profile element (7) in the edge (10) and with an angle of inclination β with respect to the radial R of the pneumatic vehicle tyre where 45° < β ≤ 60° and extends up to the radially outer surface of the tyre sidewall (9), and in that the radially outer surface of the tyre sidewall (9) extends from the flank (11) radially inwards up to the mounting portion of the tyre.

2. Pneumatic vehicle tyre according to the features of Claim 1,
where α is formed as = 90°.

3. Pneumatic vehicle tyre according to the features of Claim 1 or 2,
where β is formed as = 50°.

4. Pneumatic vehicle tyre according to the features of one or more of the preceding claims,
wherein, in the path it follows at least in its main portion of extent (13) in the circumferential direction U, the edge (10) respectively forms an included angle γ with respect to the circumferential direction U where 2° ≤ γ ≤ 10° - in particular where γ = 5°.

## Revendications

1. Bandage pneumatique pour roue de voiture automobile (PKW), présentant un profil de bande de roulement et deux parois latérales (9) de bandage de roue,
le profil de bande de roulement s'étendant d'un épaulement du bandage de roue à l'autre épaulement du bandage de roue sur toute la zone d'extension axiale de la largeur T_{A} d'appui au sol et
dans au moins un épaulement du bandage de roue, une rangée (3) de blocs profilés étant configurée avec des éléments profilés (7) en relief radial disposés les uns derrière les autres dans la direction périphérique U du bandage pneumatique pour roue de véhicule et avec des sillons (15) ou rainures s'étendant transversalement ou obliquement,
à l'extérieur de la largeur T_{A} d'appui au sol, les éléments profilés (7) étant courbés sur leur surface tournée radialement vers l'extérieur et en direction de la paroi latérale (9) la plus proche du bandage de roue, dans les plans de coupe qui contiennent l'axe du bandage de roue, la paroi latérale (9) du bandage de roue se raccordant aux éléments profilés (7) par sa surface tournée axialement vers l'extérieur, dans le prolongement des éléments profilés (7), et s'étendant radialement vers l'intérieur jusqu'à une partie de fixation du bandage de roue destinée à le fixer sur une jante,
**caractérisé en ce que**
les éléments profilés (7) s'étendent avec leur surface courbée radialement vers l'extérieur dans la direction axiale A, en direction de la paroi latérale (9) du bandage de roue, jusqu'à un bord (10) qui s'étend dans la direction périphérique U du bandage pneumatique pour roue de véhicule et
**en ce que** les éléments profilés (7) sont limités sur le bord (10) par un flanc (11) qui, dans les plans de coupe qui contiennent l'axe du bandage de roue, est configuré avec un angle d'inclinaison α par rapport à la tangente t tel que 80°≤ α ≤ 100° sur la surface radiale extérieure courbée de l'élément profilé (7) dans le bord (10) et avec un angle d'inclinaison β par rapport à la radiale R du bandage pneumatique de roue de véhicule tel que 45°≤ β ≤ 60°, et s'étend jusqu'à la surface radialement extérieure de la paroi latérale (9) du bandage de roue et
**en ce que** partant du flanc (11), la surface radialement extérieure de la paroi latérale (9) du bandage de roue s'étend radialement vers l'intérieur jusqu'à la partie de fixation du bandage de roue.

2. Bandage pneumatique pour roue de véhicule selon les caractéristiques de la revendication 1, dans lequel α = 90°.

3. Bandage pneumatique pour roue de véhicule selon les caractéristiques de la revendication 1 ou de la revendication 2, dans lequel β = 50°.

4. Bandage pneumatique pour roue de véhicule selon les caractéristiques d'une ou plusieurs des revendications précédentes, dans lequel le bord (10) forme, au moins dans sa partie d'extension principale (13), dans la direction périphérique U, un angle γ par rapport à la direction périphérique U tel que 2°≤ γ ≤ 10° et en particulier tel que γ = 5°.
